# EUROPÄISCHE PATENTANMELDUNG

(11) **EP 2 031 093 A2**
(43) Veröffentlichungstag der Anmeldung: **04.03.2009**
(21) Anmeldenummer: 08015009.7
(22) Anmeldetag: 26.08.2008
(51) Int. Cl.: C23F 11/14, C23F 11/16, C23F 11/173, C07C 323/59, C09K 8/54

(54) **Nichtionische Tenside enthaltende Korrosionsinhibitoren**

(30) Priorität: 31.08.2007 DE 102007041215
(71) Anmelder: Clariant International Ltd., 4132 Muttenz (CH)
(72) Erfinder: Leinweber, Dirk, 65779 Kelkheim (DE); Feustel, Michael, 55278 Köngernheim (DE)
(74) Vertreter: Mikulecky, Klaus

(57) **Zusammenfassung**

Gegenstand der Erfindung ist die Verwendung von Verbindungen der Formel (1) 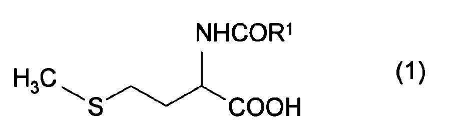 worin R¹ C₁- bis C₂₉-Alkyl, C₂- bis C₂₉-Alkenyl, C₆- bis C₃₀-Aryl oder C₇- bis C₃₀-Alkylaryl bedeutet, und nichtionische Tenside als Korrosionsinhibitoren.

## Beschreibung

Die vorliegende Erfindung betrifft ein Verfahren zur Korrosionsinhibierung an und in Einrichtungen zur Förderung und Transport von Kohlenwasserstoffen in der Erdölförderung und -verarbeitung, indem man dem korrosiven System ein Metallsalz von N-Acylmethionin und ein nichtionisches Tensid zusetzt.

In technischen Prozessen, bei denen Metalle mit Wasser oder auch mit Öl-Wasser-Zweiphasensystemen in Kontakt kommen, besteht die Gefahr der Korrosion. Diese ist besonders ausgeprägt, wenn die wässrige Phase wie bei Erdölgewinnungs- und Verarbeitungsprozessen stark salzhaltig oder durch gelöste Sauergase, wie Kohlendioxid bzw. Schwefelwasserstoff, azid ist. Daher sind die Ausbeutung einer Lagerstätte und die Verarbeitung von Erdöl ohne spezielle Additive zum Schutz der eingesetzten Ausrüstungen nicht möglich.

Geeignete Korrosionsschutzmittel für die Erdölförderung und -verarbeitung sind zwar schon seit langem bekannt, jedoch aus Gründen des Umweltschutzes für Offshore-Anwendungen zukünftig inakzeptabel.

Als typische Korrosionsinhibitoren des Standes der Technik besitzen Amide, Amidoamine bzw. Imidazoline von Fettsäuren und Polyaminen eine äußerst gute Öllöslichkeit und sind somit in der korrosiven Wasserphase aufgrund schlechter Verteilungsgleichgewichte (Partitioning) nur in geringer Konzentration vorhanden. Demgemäß müssen diese Produkte trotz ihrer schlechten biologischen Abbaubarkeit in hoher Dosierung eingesetzt werden.

Quartäre Alkylammoniumverbindungen (Quats) stellen alternative Korrosionsschutzmittel des Standes der Technik dar, die neben den korrosionsinhibierenden auch biostatische Eigenschaften besitzen können. Trotz einer verbesserten Wasserlöslichkeit zeigen die Quats, zum Beispiel im Vergleich zu den lmidazolinen, eine deutlich reduzierte Filmpersistenz und führen daher ebenfalls nur in höherer Dosierung zu einem effektiven Korrosionsschutz. Die starke Algentoxizität und die mäßige biologische Abbaubarkeit beschränken den Einsatz von Quats immer mehr auf ökologisch unsensible Anwendungsgebiete.

US-4 240 823 beschreibt N-Acyl-Methionin Derivate, die als Wachstumsregulatoren im Bereich des Pflanzenschutzes eingesetzt werden.

In JP-A-8 337 562 und JP-A-8 337 563 werden N-Acyl-Aminosäuren und ihre Alkalimetallsalze beschrieben, die auch als Korrosionsinhibitoren eingesetzt werden können.

In JP-A-49 026 145 werden N-Acyl-Aminosäure Alkalimetallsalze beschrieben, die als Korrosionsinhibitoren eingesetzt werden können. Als Beispiel wird N-Lauroylglycin Natriumsalz genannt.

Nachteilig an den Verbindungen des Standes der Technik ist jedoch, dass ihre Wirksamkeit bei niedrigen Dosierungen oft nicht ausreichend ist.

In DE-10 2006 002 784 werden N-Acyl-Methionin-Ammoniumsalze offenbart, die eine ausgezeichnete Wirkung als Korrosionsinhibitoren aufweisen, sowie eine gute biologische Abbaubarkeit und verminderte Toxizität zeigen. Nachteilig an diesen Verbindungen ist allerdings deren aufwändige Herstellung und die damit verbundenen relativ hohen Herstellkosten.

Aufgabe der vorliegenden Erfindung war es, neue Korrosionsinhibitoren zu finden, die bei verbessertem Korrosionsschutz neben einer guten Wasserlöslichkeit auch eine verbesserte biologische Abbaubarkeit und niedrigere Toxizität im Vergleich zu den Korrosionsinhibitoren des Standes der Technik bieten. Weiterhin sollen die neuen Korrosionsinhibitoren zu einem ökonomisch akzeptablen Preis herstellbar sein.

Es wurde nun überraschenderweise gefunden, dass N-Acyl-Methionin-Metallsalze in Mischung mit nichtionischen Tensiden eine ausgezeichnete Wirkung als Korrosionsinhibitoren aufweisen, sowie eine gute biologische Abbaubarkeit und verminderte Toxizität zeigen. Aufgrund einer synergistischen Wirkung zwischen N-Acyl-Methionin-Metallsalz und nichtionischem Tensid können die Dosierraten im Vergleich zum Stand der Technik deutlich reduziert werden, womit die neuen Korrosionsinhibitor-Mischungen auch ökonomisch vorteilhaft sind.

Gegenstand der Erfindung ist somit die Verwendung von Zusammensetzungen, enthaltend Metallsalze von Verbindungen der Formel (1) 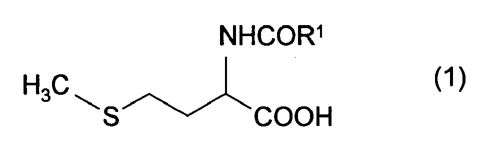 worin R¹ C₁- bis C₂₉-Alkyl, C₂- bis C₂₉-Alkenyl, C₆- bis C₃₀-Aryl oder C₇- bis C₃₀-Alkylaryl bedeutet, und nichtionische Tenside als Korrosionsinhibitoren.

Ein weiterer Gegenstand der Erfindung ist ein Verfahren zur Inhibierung von Korrosion an Metalloberflächen, insbesondere von eisenhaltigen Metallen, indem einem korrosiven System, welches mit den Metalloberflächen in Kontakt steht, mindestens ein Metallsalz von Verbindungen der Formel (1) und ein nichtionisches Tensid zugesetzt wird.

Ein weiterer Gegenstand der Erfindung sind Zusammensetzungen, enthaltend mindestens ein Metallsalz einer Verbindung der Formel (1) und mindestens ein nichtionisches Tensid.

Ein weiterer Gegenstand der Erfindung ist die Verwendung von Metallsalzen von Verbindungen der Formel (1) zusammen mit nichtionischen Tensiden als Metallbearbeitungsmittel. Hierbei bieten die erfindungsgemäßen Zusammensetzungen auch bei starker mechanischer Belastung, wie beim Schleifen, Schneiden und Bohren von Metallwerkstücken einen sehr guten Korrosionsschutz.

Korrosive Systeme im Sinne dieser Erfindung sind bevorzugt flüssig/flüssig- bzw. flüssig/gasförmig-Mehrphasensysteme, bestehend aus Wasser und Kohlenwasserstoffen, die in freier und/oder gelöster Form korrosive Bestandteile, wie Salze und Säuren, enthalten. Die korrosiven Bestandteile können auch gasförmig sein, wie etwa Schwefelwasserstoff und Kohlendioxid.

Kohlenwasserstoffe im Sinne dieser Erfindung sind organische Verbindungen, die Bestandteile des Erdöls/Erdgases sind, und deren Folgeprodukte. Kohlenwasserstoffe im Sinne dieser Erfindung sind auch leichtflüchtige Kohlenwasserstoffe, wie beispielsweise Methan, Ethan, Propan, Butan. Für die Zwecke dieser Erfindung zählen dazu auch die weiteren gasförmigen Bestandteile des Erdöls/Erdgases, wie etwa Schwefelwasserstoff und Kohlendioxid.

Bevorzugte Tenside sind solche, die in einer Konzentration von 0,5 Gew.-% in Wasser eine Oberflächenspannung dieser wässrigen Lösung von höchstens 55 mN/m, besonders bevorzugt von höchstens 50 mN/m und speziell von höchstens 45 mN/m bewirken.

In einer weiteren bevorzugten Ausführungsform der Erfindung steht R¹ für C₃- bis C₂₃-Alkyl, C₃- bis C₂₃-Alkenyl, C₆- bis C₂₄-Aryl- oder C₇- bis C₂₅-Alkylaryl, insbesondere für eine Alkyl- oder Alkenylgruppe mit 7 bis 17 Kohlenstoffatomen.

Die Herstellung von N-Acyl-Methionin-Metallsalzen erfolgt durch Acylierung von Methionin mittels eines Carbonsäurechlorids oder -anhydrids in Anwesenheit einer Base (z.B. Natriumhydroxid). Bevorzugt wird hierzu aus ökonomischen Gründen DL-Methionin eingesetzt, die enantiomerenreinen Formen können aber ebenfalls verwendet werden. Zur Acylierung werden bevorzugt C₈₋₁₈ Alkyl- bzw. Alkenylchloride eingesetzt, wie beispielsweise Octansäurechlorid, Decansäurechlorid, Dodecansäurechlorid, Kokosfettsäurechlorid oder Ölsäurechlorid.

Bei der zur Herstellung der erfindungsgemäßen Metallsalze verwendeten Base handelt es sich vorzugsweise um die Hydroxide von Alkalimetallen oder Erdalkalimetallen. Die Hydroxide von Na, K, Ca und Mg sind besonders bevorzugt.

Demzufolge sind die erfindungsgemäßen Metallsalze bevorzugt Alkali- oder Erdalkalimetallsalze, insbesondere Na-, K-, Ca- oder Mg-Salze der Verbindungen der Formel 1.

Im Gegensatz zu DE-10 2006 002 784 werden die N-Acyl-Methionin-Metallsalze vorliegend nicht neutralisiert und isoliert, sondern direkt mit den erfindungsgemäßen anionischen Tensiden zur erfindungsgemäßen Korrosionsinhibitor-Mischung formuliert. Hierdurch wird der Herstellprozess der erfindungsgemäßen Korrosionsinhibitoren deutlich ökonomischer.

Die erfindungsgemäßen N-Acyl-Methionin-Metallsalze fallen in der Regel als 10 - 50 %ige Lösungen in Wasser an und werden direkt mit einem oder mehreren anionischen Tensiden zur Korrosionsinhibitor-Mischung formuliert. Zur Stabilisierung der wässrigen Formulierungen können alkoholische Lösungsmittel wie beispielsweise Methanol, Ethanol, Propanol, Isopropanol, Butanol, 2-Ethylhexanol, Methylglykol, Butylglykol oder Butyldiglykol zugesetzt werden.

Geeignete nichtionische Tenside werden im Folgenden beschrieben.

Geeignete nichtionische Tenside sind insbesondere die Ethoxylate langkettiger, aliphatischer, synthetischer oder nativer Alkohole mit einem C₄- bis C₃₀-Alkylrest oder Alkenylrest. Diese können 1 bis 25 mol Ethylenoxid enthalten. Die Alkylkette der aliphatischen Alkohole kann linear oder verzweigt, primär oder sekundär, gesättigt oder auch ungesättigt sein.

Bevorzugt sind die Kondensationsprodukte von C₈ - bis C₂₂ -Alkoholen mit 2 bis ca. 18 mol Ethylenoxid pro mol Alkohol. Die Alkoholethoxylate können eine enge ("Narrow Range Ethoxylates") oder eine breite Homologenverteilung des Ethylenoxides ("Broad Range Ethoxylates") aufweisen. Besonders bevorzugt sind C₉-C₁₅ Oxoalkohole mit 2 bis 10 mol EO und C₁₂ - C₁₈ Fettalkohole mit 2 bis 10 mol EO.

Weitere geeignete nichtionische Tenside sind Kondensationsprodukte von Ethylenoxid mit einer hydrophoben Basis, gebildet durch Kondensation von Propylenoxid mit Propylenglykol. Der hydrophobe Teil dieser Verbindungen weist bevorzugt ein Molekulargewicht zwischen 1500 und 1800 g/mol auf. Die Anlagerung von Ethylenoxid an diesen hydrophoben Teil führt zu einer Verbesserung der Wasserlöslichkeit. Das Produkt ist flüssig bis zu einem Polyoxyethylengehalt von ca. 50 % des Gesamtgewichtes des Kondensationsproduktes, was einer Kondensation mit bis zu 40 mol Ethylenoxid entspricht. Kommerziell erhältliche Beispiele dieser Produktklasse sind die Pluronic^{®}-Marken der BASF und die Genapol^{®} PF-Marken der Clariant Produkte (Deutschland) GmbH.

Ebenfalls als nichtionische Tenside sind Kondensationsprodukte von Ethylenoxid mit einem Reaktionsprodukt von Propylenoxid und Ethylendiamin geeignet.

Die hydrophobe Einheit dieser Verbindungen besteht aus dem Reaktionsprodukt von Ethylendiamin mit überschüssigem Propylenoxid und weist im Allgemeinen ein Molekulargewicht von 2500 bis 3000 g/mol auf. An diese hydrophobe Einheit wird Ethylenoxid bis zu einem Gehalt von 40 bis 80 Gew.-% Polyoxyethylen und einem Molekulargewicht von 5000 bis 11000 g/mol addiert. Kommerziell erhältliche Beispiele dieser Verbindungsklasse sind die Tetronic^{®}-Marken der BASF und die Genapol^{®}PN-Marken der Clariant Produkte (Deutschland) GmbH.

Geeignet als nichtionische Tenside sind ebenfalls Polyethylen-, Polypropylen- und Polybutylenoxidkondensate von Alkylphenolen.

Diese Verbindungen umfassen die Kondensationsprodukte von Alkylphenolen mit einer C₄- bis C₂₄-Alkylgruppe, die entweder linear oder verzweigt sein kann, mit Alkenoxiden. Bevorzugt sind Verbindungen mit 2 bis 25 mol Alkenoxid pro mol Alkylphenol. Kommerziell erhältliche Tenside diesen Typs sind z.B. Igepal^{®} CO-630, Triton^{®} X-45, X-114, X-100 und X102, und die Arkopal^{®}-N-Marken der Clariant Produkte (Deutschland) GmbH. Diese Tenside werden als Alkylphenolalkoxylate, z. B. Alkylphenolethoxylate, bezeichnet.

Geeignet als nichtionische Tenside sind ebenfalls Polyethylen-, Polypropylen- und Polybutylenoxidkondensate von Tributylphenol oder Tristyrylphenol. Bevorzugt sind Verbindungen mit 5 bis 30 mol Alkenoxid pro Tributylphenol bzw. Tristyrylphenol.

Ebenfalls als nichtionische Tenside sind Fettsäureamide geeignet.

Fettsäureamide entsprechen vorzugsweise der Formel (2) 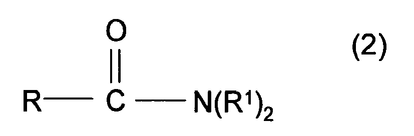 worin R eine Alkylgruppe mit 7 bis 21, bevorzugt 9 bis 17 Kohlenstoffatomen ist und jeder Rest R¹ Wasserstoff, C₁-C₄-Alkyl, C₁-C₄-Hydroxyalkyl oder (C₂H₄O)ₓH bedeutet, wobei x von 1 bis 3 variiert. Bevorzugt sind die C₈-C₂₀-Fettsäureamide, insbesondere die entsprechenden Monoethanolamide, Diethanolamide und Isopropanolamide.

Weitere geeignete nichtionische Tenside sind Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, Fettsäurepolyglycerinester, alkoxylierte Fettsäurepolyglycerinester, Ricinusölalkoxylate, alkoxylierte Triglycamide, Mischether oder Mischformyle, Alkyloligoglycoside, Alkenyloligoglycoside, Fettsäure-N-alkylglucamide, Phosphinoxide, Dialkylsulfoxide und Proteinhydrolysate.

Die erfindungsgemäßen Zusammensetzungen können alleine oder in Kombination mit anderen bekannten Korrosionsinhibitoren eingesetzt werden. Im Allgemeinen wird man so viel der erfindungsgemäßen Zusammensetzung einsetzen, dass man unter den gegebenen Bedingungen einen ausreichenden Korrosionsschutz erhält.

Bevorzugte Einsatzkonzentrationen der erfindungsgemäßen Zusammensetzungen sind 5 bis 5000 ppm, bevorzugt 10 bis 1000, insbesondere 15 bis 150 ppm. Das Mischungsverhältnis zwischen Metallsalz der Verbindung 1 und nichtionischem Tensid beträgt vorzugsweise 1:9 bis 9:1, insbesondere 3:7 bis 7:3.

Besonders geeignet als Korrosionsinhibitoren sind auch Mischungen der erfindungsgemäßen Zusammensetzungen mit anderen Korrosionsinhibitoren und/oder des Standes der Technik.

### Beispiele:

### Allgemeine Vorschrift für die Herstellung von N-Acyl-Methionin-Metallsalzen

In einer Standard-Rührapparatur werden 1 mol DL-Methionin in 300 mL Wasser mit 50 %iger wässriger Metallhydroxidlösung neutralisiert. Zu der gebildeten Lösung werden bei 15-20 °C 1 mol Carbonsäurechlorid zudosiert, wobei der pH-Wert durch parallele Dosierung von 15 %iger wässriger Metallhydroxidlösung bei 10-13 gehalten wird. Die Reaktionslösung wird 3 h bei Raumtemperatur nachgerührt. Das erhaltene N-Acyl-Methionin-Metallsalz wird mittels Alkalizahl (AZ) und Wirkstoffgehalt charakterisiert. Prozentangaben sind Gewichtsprozente bezogen auf das Gewicht des erfindungsgemäßen Salzes.

### Beispiel 1 N-Kokoyl-DL-Methionin-Natriumsalz (Vergleich)

Aus Kokosfettsäurechlorid, DL-Methionin und Natriumhydroxid wurde N-Kokoyl-DL-Methionin-Natriumsalz mit einem Wirkstoffgehalt von 40 % und einer AZ = 65 mg KOH/g erhalten.

### Beispiel 2 N-Oleyl-DL-Methionin-Kaliumsalz (Vergleich)

Aus Ölsäurechlorid, DL-Methionin und Kaliumhydroxid wurde N-Oleyl-DL-Methionin-Kaliumsalz mit einem Wirkstoffgehalt von 40% und einer AZ = 56 mg KOH/g erhalten.

### Beispiel 3 Korrosionsinhibitor-Mischung 1

40 g N-Kokoyl-DL-Methionin-Natriumsalz aus Beispiel 1 wurden mit 8 g Kokosfettalkohol + 5 EO, 20 g Butylglykol und 32 g Wasser vermischt.

### Beispiel 4 Korrosionsinhibitor-Mischung 2

40 g N-Kokoyl-DL-Methionin-Natriumsalz aus Beispiel 1 wurden mit 8 g C₁₁ Oxoalkohol + 5 EO, 20 g Butylglykol und 32 g Wasser vermischt.

### Beispiel 5 Korrosionsinhibitor-Mischung 3

40 g N-Kokoyl-DL-Methionin-Natriumsalz aus Beispiel 1 wurden mit 8 g C₁₁ Oxoalkohol + 8 EO, 20 g Butylglykol und 32 g Wasser vermischt.

### Beispiel 6 Korrosionsinhibitor-Mischung 4

40 g N-Kokoyl-DL-Methionin-Natriumsalz aus Beispiel 1 wurden mit 8 g C_{14/15} Oxoalkohol + 4 EO, 20 g Butylglykol und 32 g Wasser vermischt.

### Beispiel 7 Korrosionsinhibitor-Mischung 5

40 g N-Kokoyl-DL-Methionin-Natriumsalz aus Beispiel 1 wurden mit 8 g Oleylalkohol + 10 EO, 20 g Butylglykol und 32 g Wasser vermischt.

### Beispiel 8 Korrosionsinhibitor-Mischung 6

40 g N-Kokoyl-DL-Methionin-Natriumsalz aus Beispiel 1 wurden mit 8 g p-Nonylphenol + 4 EO, 20 g Butylglykol und 32 g Wasser vermischt.

### Beispiel 9 Korrosionsinhibitor-Mischung 7

40 g N-Kokoyl-DL-Methionin-Natriumsalz aus Beispiel 1 wurden mit 8 g Tributylphenol + 8 EO, 20 g Butylglykol und 32 g Wasser vermischt.

### Beispiel 10 Korrosionsinhibitor-Mischung 8

40 g N-Kokoyl-DL-Methionin-Natriumsalz aus Beispiel 1 wurden mit 8 g Tristyrylphenol + 10 EO, 20 g Butylglykol und 32 g Wasser vermischt.

### Beispiel 11 Korrosionsinhibitor-Mischung 9

40 g N-Kokoyl-DL-Methionin-Natriumsalz aus Beispiel 1 wurden mit 8 g Genapol PN 30 (Ethylendiamin + EO + PO), 20 g Butylglykol und 32 g Wasser vermischt.

### Beispiel 12 Korrosionsinhibitor-Mischung 10

40 g N-Kokoyl-DL-Methionin-Natriumsalz aus Beispiel 1 wurden mit 8 g Diglycerinoleat, 20 g Butylglykol und 32 g Wasser vermischt.

### Beispiel 13 Korrosionsinhibitor-Mischung 11

40 g N-Kokoyl-DL-Methionin-Natriumsalz aus Beispiel 1 wurden mit 8 g Ricinusöl + 20 EO, 20 g Butylglykol und 32 g Wasser vermischt.

### Beispiel 14 Korrosionsinhibitor-Mischung 12

40 g N-Oleoyl-DL-Methionin-Kaliumsalz aus Beispiel 2 wurden mit 8 g Kokosfettalkohol + 5 EO, 20 g Butylglykol und 32 g Wasser vermischt.

### Beispiel 15 Korrosionsinhibitor-Mischung 13

40 g N-Oleoyl-DL-Methionin-Kaliumsalz aus Beispiel 2 wurden mit 8 g C₁₁ Oxoalkohol + 5 EO, 20 g Butylglykol und 32 g Wasser vermischt.

### Beispiel 16 Korrosionsinhibitor-Mischung 14

40 g N-Oleoyl-DL-Methionin-Kaliumsalz aus Beispiel 2 wurden mit 8 g C₁₁ Oxoalkohol + 8 EO, 20 g Butylglykol und 32 g Wasser vermischt.

### Beispiel 17 Korrosionsinhibitor-Mischung 15

40 g N-Oleoyl-DL-Methionin-Kaliumsalz aus Beispiel 2 wurden mit 8 g C_{14/15} Oxoalkohol + 4 EO, 20 g Butylglykol und 32 g Wasser vermischt.

### Beispiel 18 Korrosionsinhibitor-Mischung 16

40 g N-Oleoyl-DL-Methionin-Kaliumsalz aus Beispiel 2 wurden mit 8 g Oleylalkohol + 10 EO, 20 g Butylglykol und 32 g Wasser vermischt.

### Beispiel 19 Korrosionsinhibitor-Mischung 17

40 g N-Oleoyl-DL-Methionin-Kaliumsalz aus Beispiel 2 wurden mit 8 g p-Nonylphenol + 4 EO, 20 g Butylglykol und 32 g Wasser vermischt.

### Beispiel 20 Korrosionsinhibitor-Mischung 18

40 g N-Oleoyl-DL-Methionin-Kaliumsalz aus Beispiel 2 wurden mit 8 g Tributylphenol + 8 EO, 20 g Butylglykol und 32 g Wasser vermischt.

### Beispiel 21 Korrosionsinhibitor-Mischung 19

40 g N-Oleoyl-DL-Methionin-Kaliumsalz aus Beispiel 2 wurden mit 8 g Tristyrylphenol + 10 EO, 20 g Butylglykol und 32 g Wasser vermischt.

### Beispiel 22 Korrosionsinhibitor-Mischung 20

40 g N-Oleoyl-DL-Methionin-Kaliumsalz aus Beispiel 2 wurden mit 8 g Genapol PN 30 (Ethylendiamin + EO + PO), 20 g Butylglykol und 32 g Wasser vermischt.

### Beispiel 23 Korrosionsinhibitor-Mischung 21

40 g N-Oleoyl-DL-Methionin-Kaliumsalz aus Beispiel 2 wurden mit 8 g Diglycerinoleat, 20 g Butylglykol und 32 g Wasser vermischt.

### Beispiel 24 Korrosionsinhibitor-Mischung 22

40 g N-Oleoyl-DL-Methionin-Kaliumsalz aus Beispiel 2 wurden mit 8 g Ricinusöl + 20 EO, 20 g Butylglykol und 32 g Wasser vermischt.

### Beispiel 25 Korrosionsinhibitor-Mischung 23

55 g N-Kokoyl-DL-Methionin-Natriumsalz aus Beispiel 1 wurden mit 2 g C₁₁ Oxoalkohol + 5 EO, 20 g Butylglykol und 23 g Wasser vermischt.

### Wirksamkeit der erfindungsgemäßen Verbindungen als Korrosionsinhibitoren

Die erfindungsgemäßen Verbindungen wurden als Korrosionsinhibitoren im Shell-Wheel-Test geprüft. Coupons aus C-Stahl (DIN 1.1203 mit 15 cm² Oberfläche) wurden in eine Salzwasser/Petroleum-Mischung (9:1,5 %ige NaCl-Lösung mit Essigsäure auf pH 3,5 gestellt) eingetaucht und bei einer Umlaufgeschwindigkeit von 40 rpm bei 70 °C 24 Stunden diesem Medium ausgesetzt. Die Dosierung des Inhibitors betrug 50 ppm einer 24 % Lösung des Inhibitors. Die Schutzwerte wurden aus der Massenabnahme der Coupons, bezogen auf einen Blindwert, berechnet.

In den folgenden Tabellen bezeichnet "Vergleich 1" ein handelsübliches Rückstandsamin - Quat auf Basis Dikokosalkyl-dimethylammoniumchlorid, "Vergleich 2" ein handelsübliches Imidazolin-Salz auf Basis Ölsäure-Diethylentriamin und "Vergleich 3" ein Beispiel aus DE-10 2006 002 784 (N-Kokoyl-DL-Methionin-Morpholiniumsalz, Korrosionsinhibitor des Standes der Technik).

**Tabelle 1: (Shell-Wheel-Test)**

| Beispiel | Korrosionsinhibitor | ∅ Schutz % |
|---|---|---|
| Vergleich 1 | Standard-Quat | 28 |
| Vergleich 2 | Ölsäure-DETA-imidazolin | 70 |
| Vergleich 3 | N-Kokoyl-DL-Methionin-Morpholiniumsalz | 75 |
| Vergleich 4 | aus Beispiel 1 | 67 |
| Vergleich 5 | aus Beispiel 2 | 69 |
| 26 | aus Beispiel 3 | 82 |
| 27 | aus Beispiel 4 | 87 |
| 28 | aus Beispiel 5 | 86 |
| 29 | aus Beispiel 6 | 86 |
| 30 | aus Beispiel 7 | 90 |
| 31 | aus Beispiel 8 | 89 |
| 32 | aus Beispiel 9 | 83 |
| 33 | aus Beispiel 10 | 80 |
| 34 | aus Beispiel 11 | 84 |
| 35 | aus Beispiel 12 | 83 |
| 36 | aus Beispiel 13 | 85 |
| 37 | aus Beispiel 14 | 84 |
| 38 | aus Beispiel 15 | 91 |
| 39 | aus Beispiel 16 | 91 |
| 40 | aus Beispiel 17 | 88 |
| 41 | aus Beispiel 18 | 85 |
| 42 | aus Beispiel 19 | 86 |
| 43 | aus Beispiel 20 | 85 |
| 44 | aus Beispiel 21 | 82 |
| 45 | aus Beispiel 22 | 79 |
| 46 | aus Beispiel 23 | 82 |
| 47 | aus Beispiel 24 | 82 |
| 48 | aus Beispiel 25 | 79 |

Wie aus Tabelle 1 zu erkennen ist, weisen die erfindungsgemäßen Zusammensetzungen sehr gute Korrosionsschutzeigenschaften bei sehr niedriger Dosierung auf und übertreffen die Wirksamkeit der Inhibitoren des Standes der Technik zum Teil sogar deutlich.

Beispiel 48 zeigt im Vergleich zu Beispiel 27, dass der synergistische Effekt des N-Acylmethionin-Metallsalzes in Kombination mit einem nichtionischen Tensid bei einem Verhältnis von > 9:1 zwar abnimmt, aber immer noch vorhanden ist.

**Tabelle 2: Biologische Abbaubarkeit (OECD 306) und Toxizität (EC₅₀ Skeletonema Costatum) ausgewählter erfindungsgemäßer Korrosionsinhibitoren**

| Beispiel | Korrosionsinhibitor | Biologische Abbaubarkeit [%] | Toxizität EC₅₀ [mg/L] |
|---|---|---|---|
| Vergleich 1 | Standard-Quat | 15,2 | 0,57 |
| Vergleich 2 | Ölsäure-DETA-imidazolin | 6,8 | 0,33 |
| 49 | aus Beispiel 4 | 78,2 | 30,2 |
| 50 | aus Beispiel 5 | 81,5 | 35,2 |
| 51 | aus Beispiel 10 | 85,0 | 87,7 |
| 52 | aus Beispiel 23 | 82,3 | 120,7 |
| 53 | aus Beispiel 24 | 86,9 | 116,0 |

Wie aus Tabelle 2 klar ersichtlich ist, zeigen die erfindungsgemäßen Verbindungen eine bessere biologische Abbaubarkeit und niedrigere Toxizität als die Vergleichsbeispiele aus dem Stand der Technik.

## Patentansprüche

1. Verwendung von Zusammensetzungen enthaltend Metallsalze von Verbindungen der Formel (1) 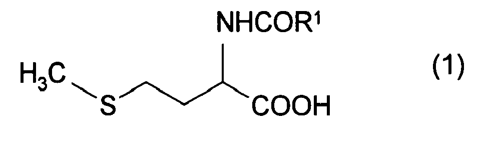 worin R¹ C₁- bis C₂₉-Alkyl, C₂- bis C₂₉-Alkenyl, C₆- bis C₃₀-Aryl oder C₇- bis C₃₀-Alkylaryl bedeutet, und nichtionische Tenside als Korrosionsinhibitoren.

2. Verwendung nach Anspruch 1, wobei R¹ für eine Alkyl- oder Alkenylgruppe von 7 bis 17 Kohlenstoffatomen steht.

3. Verwendung nach Anspruch 1 und/oder 2, wobei das Metallsalz ein Alkalimetallsalz ist.

4. Verwendung nach einem oder mehreren der Ansprüche 1 bis 3, wobei das nichtionische Tensid ein Addukt aus 1 bis 25 mol Ethylenoxid und einem Alkohol mit einem C₄- bis C₃₀-Alkyl- oder Alkenylrest ist.

5. Verwendung nach einem oder mehreren der Ansprüche 1 bis 4, wobei das nichtionische Tensid das Produkt einer Anlagerung von 1 bis 40 mol Ethylenoxid an wasserunlösliches Kondensationsprodukt von Propylenoxid an Propylenglykol mit einem Molekulargewicht von 1500 bis 1800 g/mol ist.

6. Verwendung nach einem oder mehreren der Ansprüche 1 bis 5, wobei das nichtionische Tensid durch die Addition von Propylenoxid an Ethylendiamin bis zu einem Molekulargewicht von 2500 bis 3000 g/mol, und nachfolgende Ethoxylierung bis zu einem Molekulargewicht von 5000 bis 11.000 erhältlich ist.

7. Verwendung nach einem oder mehreren der Ansprüche 1 bis 6, worin das nichtionische Tensid ein alkoxyliertes C₄- bis C₂₄-Alkylphenol ist.

8. Verwendung nach einem oder mehreren der Ansprüche 1 bis 7, wobei das nichtionische Tensid ein alkoxyliertes Tributylphenol oder Tristyrylphenol ist.

9. Verwendung nach einem oder mehreren der Ansprüche 1 bis 8, wobei das nicht-ionische Tensid der Formel 3 entspricht 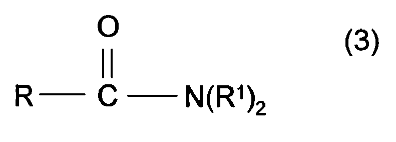 worin
R C₇-C₂₁-Alkyl,
R¹ jeweils Alkyl oder Hydroxyalkyl mit 1 bis 4 Kohlenstoffatomen oder (C₂H₄O)ₓ-H
x eine Zahl von 1 bis 3 bedeuten.

10. Verwendung nach einem oder mehreren der Ansprüche 1 bis 9, worin die Gesamtmenge an Metallsalz und nichtionischem Tensid zwischen 5 und 5000 ppm liegt.

11. Verwendung nach einem oder mehreren der Ansprüche 1 bis 10, worin das Gewichtsverhältnis zwischen Metallsalz und nichtionischem Tensid zwischen 1:9 und 9:1 liegt.

12. Verwendung nach einem oder mehreren der Ansprüche 1 bis 11 als Korrosionsinhibitoren an und in Einrichtungen zur Förderung und Transport von Kohlenwasserstoffen in der Erdölförderung und -verarbeitung.

13. Verwendung nach einem oder mehreren der Ansprüche 1 bis 12 als Korrosionsinhibitoren in Metallbearbeitungshilfsmitteln.

14. Zusammensetzungen, enthaltend mindestens ein Metallsalz einer Verbindung der Formel (1) 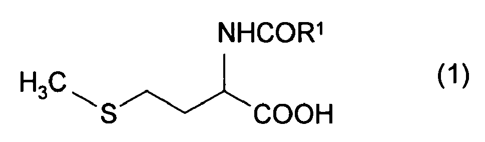 worin R¹ C₁- bis C₂₉-Alkyl, C₂- bis C₂₉-Alkenyl, C₆- bis C₃₀-Aryl oder C₇- bis C₃₀-Alkylaryl bedeutet, sowie mindestens ein nichtionisches Tensid.

15. Zusammensetzungen nach Anspruch 14, worin das Gewichtsverhältnis von Metallsalz zu nichtionischem Tensid zwischen 9:1 und 1:9 liegt.
